# EUROPEAN PATENT APPLICATION

(11) **EP 4 455 801 A1**
(43) Date of publication of application: **30.10.2024**
(21) Application number: 22908940.4
(22) Date of filing: 23.11.2022
(51) Int. Cl.: G05B 13/04, G05D 1/02, B25J 9/16, G06V 10/82

(54) **CONTROL PLATFORM FOR STANDALONE SYSTEMS**

(30) Priority: 20.12.2021 BR 102021025722
(71) Applicant: Embraer S.A., São José dos Campos, 12227-901-SP (BR)
(72) Inventor: DE MELLO, João Marcos Gomes, 12.227-901 São José dos Campos (BR); FERREIRA, Oséias Faria De Arruda, 12.227-901 São José dos Campos (BR)
(74) Representative: Liesegang, Eva
(86) International application number: PCT/BR2022/050457
(87) International publication number: WO 2023/115182

(57) **Abstract**

There is described a control platform for autonomous systems, which integrates digital product and process information with data obtained by means of sensors, using artificial intelligence, for example, artificial neural networks for system feedback and decision making in the autonomous execution of activities.

## Description

The present invention is related to a control platform for autonomous systems, which integrates digital product and process information with data obtained by means of sensors, using artificial intelligence, for example, artificial neural networks for system feedback and decision making in the autonomous execution of activities.

### Description of the prior art

The systems currently known belong to the so-called Automation Era. They are highly repetitive systems and have all the parametrization thereof (such as trajectory programming and process parametrization) carried out manually. That is, they require a prior programming which must be inserted into the system for the automation to occur.

In this case, even if they have auxiliary programming interfaces, such as CAE Systems, programming interfaces and simulation such as VERICUT and DELMIA, these are time-consuming and do not support the decision making.

Thus, the main characteristics found in the solutions of the Automation Era already known to the prior of the art are: (a) programmable robots for following strict and unadaptable trajectories, that is, they do not deal with errors in the process, nor differences in the environment for which they were programmed; (b) the virtual environment used many times cannot be representative of the physical environment and, in this case, the robots of the systems already known do not have adaptive methods and instruments; (c) there is no instrumentation of these systems for operating with Artificial Intelligence (AI) and, therefore, they do not have learning algorithms; (d) the process parametrization is made manually, many times through trial and error, since they do not make use of the data history of similar processes to optimize the parametrization process, demanding a high workload.

Apart from all these characteristics, it is observed that the cycle and cost are high for validation of the entry into production of the equipment and both the cycle as the cost repeat themselves upon any change in the programmed scenario.

Another example of the use of autonomous robots is taught in document US 2017/0334066 which is related to a method and a device which use *"Machine Learning"* algorithms or learning algorithms, to predict movements which will occur for objects in an environment of a robot in response to a particular movement of this robot in this environment. Therefore, the method and device predict training of a neural network model for predicting at least one transformation, if there is, of an image in the environment of the robot which will occur as a result of an implementation of at least one portion of particular motion of the robot in this environment. The neural network training model can predict the transformation based on data inserted which includes the image and a group of motion parameters of the robot which define the particular motion portion.

Although the method referred to in document US 2017/0334066 employs Artificial Intelligence resources to optimize the parameters and uses digital process, product, environment information and resources information, for control and automatic generation of the trajectory of the robot, this document does not teach the use of historical process information, the use together with data from sensors for monitoring the trajectory of the robot or other autonomous solution and, mainly, the digital information feedback, consequently, the learning algorithm resource of this method already known to the state of the art, is extremely limited.

### Objectives of the invention

Thus, the present invention has the purpose of providing a control platform for autonomous systems, which integrates digital product and process information with data obtained by means of sensors, using artificial intelligence, for example, artificial neural networks for system feedback and decision making in the autonomous execution of activities by the devices.

### Brief description of the invention

This invention has as object, a control platform for autonomous systems, the control platform comprising consumption of process, product, environment and resources data of a digital model for automatic generation of trajectories for autonomous systems, the control platform for autonomous systems further comprising:
(i) Creation of physical media reference data;
(ii) Application of historical process, product, environment and resources data located in a database;
(iii) Control of the digital information, the reference data and the historical data combined for automatic generation of trajectories for autonomous systems;
(iv) Action of an anti-collision subsystem by means of a self-protection module in the monitoring of the automatic trajectories of the autonomous systems;
(v) Use of Artificial Intelligence (AI) algorithms for active control and modification of the automatic trajectories of the autonomous systems;
(vi) Control and monitoring of resources and parameters; and
(vii) Automatic inspection and generation of historical data from processes, product, environment and resources for database feedback.

### Detailed description of the figures

Figure 1 - is a flowchart of the control platform for autonomous systems object of this invention; and
Figure 2 - is a scheme of the modules which compose the control platform for autonomous systems object of the present invention.

### Detailed description of the invention

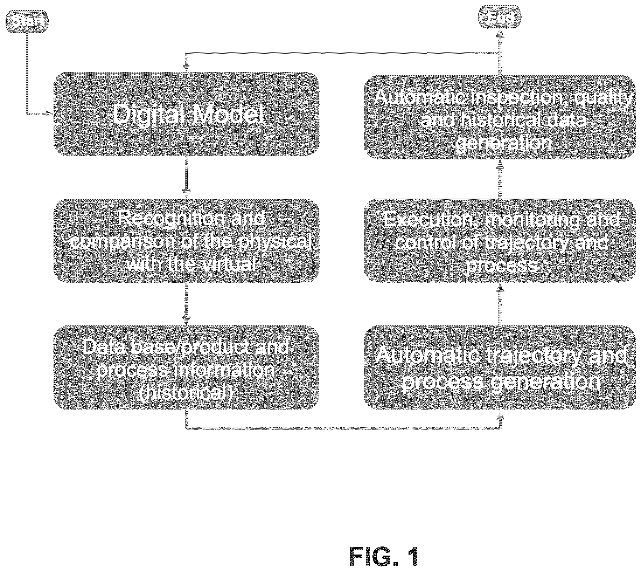

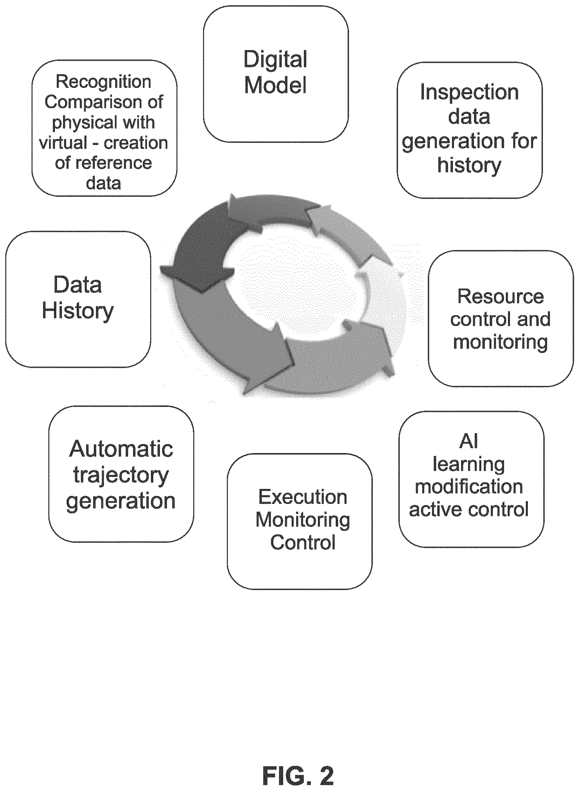

According to a preferred embodiment and as illustrated in figures 1 and 2, the control platform for autonomous systems, object of this invention, has as purpose to provide autonomy to autonomous systems, particularly industrial autonomous systems, by means of a cycle of functions and actions which feeds itself for developing products and processes. The autonomous systems can be robotic arms, mechatronic equipment and other similar equipment which move through an environment.

In this sense, and as can be seen in the figures, the control platform for autonomous systems comprises the use or consumption of process, product, environment and resources digital information, that is, once a task start request is made, the digital identification of the product and process to be made is carried out. More precisely, there are obtained digital information of the product, the process, the scenario of the location wherein the task will be carried out and the available resources obtained by means of corporative systems and data banks (ERP) such as, for example, MES/SAP systems or equivalent.

Next, the control platform for autonomous systems proceeds with the creation of physical media reference data, which consists in the recognition and comparison of the physical with the virtual/digital. In this step, a plurality of sensors located in the environment wherein the autonomous systems perform the trajectories generated has the function of monitoring the displacement of the autonomous systems, creating the physical media reference data, identifying alterations in this environment such as, for example, the presence of a new object or absence of an object that is already identified, which can demand alterations in the trajectories to be followed by the autonomous systems. The data obtained by this plurality of sensors are received by the control platform, recognized and compared with the data of the digital model with the purpose of feeding same so as to alter/confirm the trajectories of the autonomous systems for that environment.

Additionally, the control platform for autonomous systems also uses historical process, product, environment and resource data, available in a database. In this sense, a parametrization module establishes the process parameters from the trajectories generated. Said parameters consist of process data such as: drilling (rotation speed, tool feed speed, amount of lubricant, *peck drilling,* etc.), sealant (sealant application rate, application speed), machining, etc., which history originating from previous products is present in databases and can be used as reference to parametrize processes in new products which are similar. A comparison between the historical data and the data of the current request is also carried out.

Thus, based on the scenario or digital data, on the data provided by the history and the data obtained and recognized by the sensors, the control platform for autonomous systems proceeds with the control and automatic generation of trajectories and processes (parameters and tasks) for the autonomous systems.

After the automatic generation of the trajectories, the control platform foresees the execution and monitoring of the requested task, as well as the control of these trajectories and processes generated, detecting eventual changes in trajectory or parameters if necessary.

More specifically, for the autonomous systems not to collide due to alterations in the environment wherein they will execute their trajectories, an anti-collision subsystem acts in this trajectory monitoring of the autonomous systems by means of a self-protection module. This anti-collision subsystem comprises a plurality of sensors such as ultrasonic sensors, Lidars and/or cameras, for example, and which monitor the environment forming a volume allowed at each point of the trajectory. If this volume is exceeded by any object in the interior thereof which was not contemplated by the generated trajectory, the subsystem issues a trajectory recalculation or stop command to the platform. Additionally, the protection volume can have a warning area for recalculating trajectory and another smaller immediate stop area.

The control platform for autonomous systems uses Artificial Intelligence (AI) algorithms to generate, execute, actively control and modify these trajectories of the autonomous systems in a constant manner. In this sense, there are used the data originating from the digital model, the plurality of sensors and information of the anti-collision subsystem for learning the necessary modifications in the trajectories and behavior of the autonomous systems, so that the platform for autonomous systems makes the due adjustments in the data to be used henceforth.

In this case, the AI can generate an original trajectory or make the monitoring and correction of the generated trajectories. For this, the AI is trained in simulation environment (Digital twin of the product/process). Algorithms and AI techniques, for example Reinforcement Learning, are used for learning to make decisions on the motion of each degree of freedom of the systems which allow building the trajectory up to the final objective without colliding. Both the digital model as the real model referencing and the readings from the plurality of sensors are used, whether in virtual or real environment throughout the entire trajectory.

Optionally, the control platform for autonomous systems can deactivate the AI learning module, so that, after generating the trajectories, the autonomous system acts in a repetitive, conventional manner, in case there is no further optimization to be carried out for the requested task.

Additionally, the resources and parameters of the autonomous systems during the execution of the generated trajectories are controlled and monitored, with the purpose of ensuring the integrity of the product and of the resources used. In this step, the control platform for autonomous systems once again uses the Artificial Intelligence (AI) algorithms, for providing learning and optimization of the parameters. A plurality of Als can be used for specific tasks. One for generating and monitoring trajectories and others for parametrizing each process that the autonomous system will execute upon reaching the destination point. Said parametrization associates historical data of processes executed a priori in similar products for generating new optimized parameters for new products or improvement in current processes.

All this information and parameters is used by the inspection module for automatic inspection of the product and process, that is, the inspection module inspects the product to ensure the characteristics thereof and identify possible noise in the process, anomalies, non-conformities which can be used as data for the AI to adjust the parametrization and ensure the quality of the product, for example. If the diameter of a hole tends to exceed the upper limit this can be detected by inspection and the neural network can reduce forward speed to overcome this tendency and return to the results of holes near the nominal one. In welding, the viscosity is altered according to curing time and temperature. Thus, the neural network can obtain this information by means of sensors and automatically regulate the sealant application rate, ensuring quality and generating historical data on processes, product, environment and resources digital information for feeding the database, both with digital data as with the process and parameter data.

Thus, the control platform for autonomous systems is fed with the process, resource, products and parameter data, in a "Closed Loop" approach, providing constant updating of these data and an improvement in the systems automation.

In this sense, the optimization of processes using the historical data which is fed allows the control platform for autonomous systems, object of the present invention, to improve the generation and execution of the trajectories, without it being necessary to use trial and error methods and greatly improving the productivity of the autonomous systems.

Another advantage of the control platform for autonomous systems lies in the exclusion of the manual program which does not add value to the product and consumes process time.

Finally, the feed of the control platform for autonomous systems with the data generated in the monitoring of parameters in the execution of the trajectories and, further, the generation of data for history, which is subsequently used for generating new, improved trajectories, provides greater precision in the use of resources and better product quality.

Having described one example of a preferred embodiment, it should be understood that the scope of the present object encompasses other possible variations, being limited solely by the content of the accompanying claims, possible equivalents being included therein.

## Claims

1. Control platform for autonomous systems, the control platform comprising consumption of process, product, environment and resources data of a digital model for automatic generation of trajectories for autonomous systems, the control platform for autonomous systems being **characterized by** the fact that it further comprises:
(i) Creation of physical media reference data;
(ii) Application of historical processes, product, environment and resources data located in a database;
(iii) Control of the digital information, the reference data and the historical data combined for automatic generation of trajectories for autonomous systems;
(iv) Action of an anti-collision subsystem by means of a self-protection module in the monitoring of the automatic trajectories of the autonomous systems;
(v) Use of Artificial Intelligence (AI) algorithms for active control and modification of the automatic trajectories of the autonomous systems;
(vi) Control and monitoring of resources and parameters; and
(vii) Automatic inspection and generation of historical data from processes, product, environment and resources for database feedback.

2. Platform, according to claim 1, wherein the physical media reference data results are from a plurality of sensors displayed in environments wherein the autonomous system performs the generated trajectories.

3. Platform, according to claim 1, wherein the physical media reference data are compared with the digital model data for feeding the platform with confirmations or alterations of the generated trajectories.

4. Platform, according to claim 1, wherein the historical data are used as reference for parameters for new products.

5. Platform, according to claim 1, wherein the anti-collision subsystem comprises a plurality of sensors which monitor the environment forming allowed volumes at points of the trajectory and issuing recalculation commands whenever these allowed volumes are violated.

6. Platform, according to claim 1, wherein the anti-collision subsystem further comprises a warning area for recalculation of trajectory and an immediate stop area.

7. Platform, according to claims 1 to 6, wherein the Artificial Intelligence (AI) algorithms, for active control and modification of the automatic trajectories of the autonomous systems use data originating from the digital model, the plurality of sensors and the anti-collision subsystem for learning the modifications in the trajectories and behavior of the autonomous systems.
